(19) Europäisches Patentamt
European Patent Office
Office européen des brevets

(11) **EP 4 213 374 A1**

(12) **EUROPEAN PATENT APPLICATION**
published in accordance with Art. 153(4) EPC

(43) Date of publication:
**19.07.2023  Bulletin 2023/29**

(51) International Patent Classification (IPC):
***H02P 29/40*** (2016.01)  ***B25J 9/12*** (2006.01)

(21) Application number: **21866711.1**

(52) Cooperative Patent Classification (CPC):
**B25J 9/12; H02P 29/40**

(22) Date of filing: **06.09.2021**

(86) International application number:
**PCT/JP2021/032616**

(87) International publication number:
**WO 2022/054752 (17.03.2022 Gazette 2022/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.09.2020  JP 2020151227**

(71) Applicant: **KAWASAKI JUKOGYO KABUSHIKI KAISHA**
**Kobe-shi, Hyogo 650-8670 (JP)**

(72) Inventors:
• **TANABE, Masataka**
  **Hyogo 650-8670 (JP)**
• **NAKAMURA, Kenta**
  **Hyogo 650-8670 (JP)**

(74) Representative: **Müller-Boré & Partner**
**Patentanwälte PartG mbB**
**Friedenheimer Brücke 21**
**80639 München (DE)**

(54) **CURRENT LIMITING DEVICE, ROBOT SYSTEM, AND CURRENT LIMITING METHOD**

(57)     A current limiting device (21) includes a current limiter (23) to limit a current to be carried to a drive (14) within a range of a current limit value. The current limit value is set to change according to an acceleration of the drive (14).

*FIG.3*

## Description

Technical Field

The present disclosure relates to a current limiting device, a robot system, and a current limiting method, and more particularly, it relates to a current limiting device, a robot system, and a current limiting method that each limit a current to be carried to a drive.

Background Art

Conventionally, a robot in which an upper limit is set for a current to be carried to a motor is known. Such a robot is disclosed in Japanese Patent Laid-Open No. 2008-073790, for example.

Japanese Patent Laid-Open No. 2008-073790 discloses a robot including a robot main body in which a plurality of links are connected to each other via joints, motors provided at the joints of the robot main body, and speed reducers that slow rotation of the motors. This robot includes current measuring means that measure currents being carried to the motors. When the robot main body is stationary, upper limits are set for the currents to be carried to the motors based on current values measured by the current measuring means. Specifically, when the robot is stationary, constant upper limits of currents are set according to the torques of the motors required to maintain a predetermined posture. Thus, it is possible to appropriately limit driving torques applied to the joints according to the posture of the robot.

Prior Art

Patent Document

Patent Document 1: Japanese Patent Laid-Open No. 2008-073790

Summary of the Invention

In a conventional robot including speed reducers that slow rotation of motors as described in Japanese Patent Laid-Open No. 2008-073790, inertias (the inertias of the motors themselves, the inertias of gears of the speed reducers, etc.) exist between the motors and the speed reducers. Torque is expressed as the product of inertia and acceleration, and thus when the motion of an arm driven by a motor is accelerated (an acceleration is increased), a required torque increases as an inertia increases. That is, it is necessary to increase a torque generated by the motor by increasing a current carried to the motor. However, as in Japanese Patent Laid-Open No. 2008-073790, when constant upper limits are set for the currents to be carried to the motors, the motors may not be able to generate sufficient torques even when the upper limit currents are carried to the motors. Therefore, when inertias between the motors and the speed reducers (drive force transmitters) are large, a member (such as an arm) driven by the motors (drives) cannot be sufficiently accelerated.

The present disclosure is intended to solve the above problem. The present disclosure aims to provide a current limiting device, a robot system, and a current limiting method capable of sufficiently accelerating a member driven by a drive even when an inertia between the drive and a drive force transmitter is large.

In order to attain the aforementioned object, a current limiting device according to a first aspect of the present disclosure limits a current to be carried to a drive that transmits a drive force via a drive force transmitter, and includes a current limiter to limit the current to be carried to the drive within a range of a current limit value. The current limit value is set to change according to an acceleration of the drive. The term "drive" indicates a concept including a motor, a proportional solenoid, etc. The term "acceleration" indicates a concept including not only a normal acceleration but also an angular acceleration.

In the current limiting device according to the first aspect of the present disclosure, as described above, the current limit value of the current to be carried to the drive is set to change according to the acceleration of the drive. Accordingly, even when an inertia between the drive and the drive force transmitter is large, the drive can generate a sufficient torque by changing the current limit value according to the acceleration of the drive. Consequently, even when the inertia between the drive and the drive force transmitter is large, a member (such as an arm) driven by the drive can be sufficiently accelerated.

A robot system according to a second aspect of the present disclosure includes a robot and a robot controller configured or programmed to control the robot. The robot includes a joint, a motor provided at the joint, and a speed reducer to slow rotation of the motor. The robot controller includes a current limiter to limit a current to be carried to the motor within a range of a current limit value. The current limit value is set to change according to an acceleration of the motor.

In the robot system according to the second aspect of the present disclosure, as described above, the current limit value of the current to be carried to the motor is set to change according to the acceleration of the motor. Accordingly, even when an inertia between the motor and the speed reducer is large, the motor can generate a sufficient torque by changing the current limit value according to the acceleration of the motor. Consequently, it is possible to provide the robot system capable of sufficiently accelerating an arm driven by the motor even when the inertia between the motor and the speed reducer is large.

A current limiting method according to a third aspect of the present disclosure is for limiting a current to be carried to a drive that transmits a drive force via a drive force transmitter, and includes acquiring an acceleration of the drive, setting a current limit value of the current to be carried to the drive based on the acquired acceleration of the drive, and carrying the current to the drive within a range of the set current limit value.

As described above, the current limiting method according to the third aspect of the present disclosure includes setting the current limit value of the current to be carried to the drive based on the acquired acceleration of the drive. Accordingly, even when an inertia between the drive and the drive force transmitter is large, the drive can generate a sufficient torque by changing the current limit value according to the acceleration of the drive. Consequently, it is possible to provide the current limiting method capable of sufficiently accelerating a member (such as an arm) driven by the drive even when the inertia between the drive and the drive force transmitter is large.

According to the present disclosure, as described above, it is possible to sufficiently accelerate the member driven by the drive even when the inertia between the drive and the drive force transmitter is large.

Brief Description of the Drawings

FIG. 1 is a diagram showing the configuration of a robot system according to an embodiment of the present disclosure.
FIG. 2 is a block diagram of a robot controller according to the embodiment of the present disclosure.
FIG. 3 is a control block diagram of the robot controller according to the embodiment of the present disclosure.
FIG. 4 is a diagram (1) for illustrating a state in which the absolute value of a current limit value decreases.
FIG. 5 is a diagram (2) for illustrating a state in which the absolute value of the current limit value decreases.
FIG. 6 is a flowchart for illustrating a current limiting method according to the embodiment of the present disclosure.
FIG. 7 is a diagram showing the configuration of a medical robot according to a modified example.
FIG. 8 is a block diagram (1) showing the configuration of a robot controller according to a modified example.
FIG. 9 is a block diagram (2) showing the configuration of a robot controller according to a modified example. Modes for Carrying Out the Invention

An embodiment embodying the present disclosure is hereinafter described on the basis of the drawings.

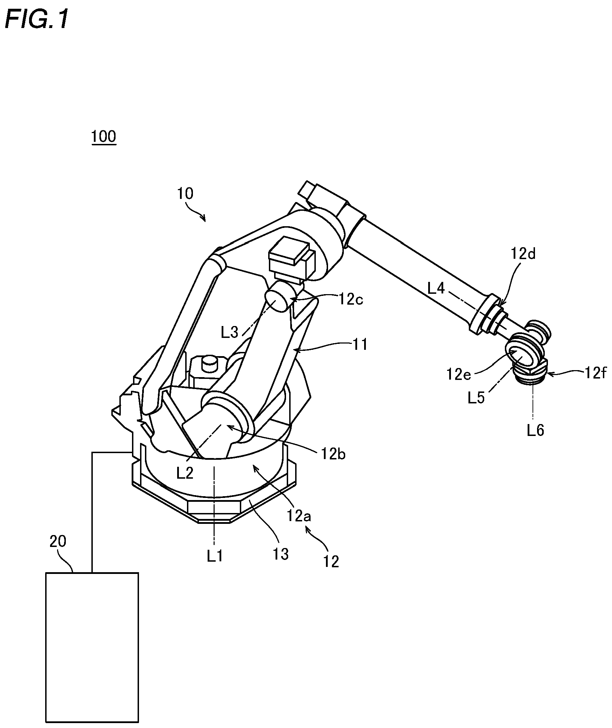

The configuration of a robot system 100 according to this embodiment is now described with reference to FIGS. 1 to 6.

As shown in FIG. 1, the robot system 100 includes a robot 10 and a robot controller 20 that controls the robot 10. The robot 10 is a six-axis robot, for example. Furthermore, the robot 10 is an industrial robot, for example.

As shown in FIG. 1, the robot 10 includes an arm 11. The arm 11 includes joints 12. A plurality of joints 12 are provided. For example, six joints 12 (joints 12a to 12f) are provided. The arm 11 is attached to a base 13. The joint 12a is rotatable about an axis L1 extending in a vertical direction. The joint 12b is rotatable about an axis L2 extending in a horizontal direction. The joint 12c is rotatable about an axis L3 extending parallel to the axis L2.

The joint 12d is rotatable about an axis L4 perpendicular to the axis L3. The joint 12e is rotatable about an axis L5 perpendicular to the axis L4. The joint 12f is rotatable about an axis L6 perpendicular to the axis L5.

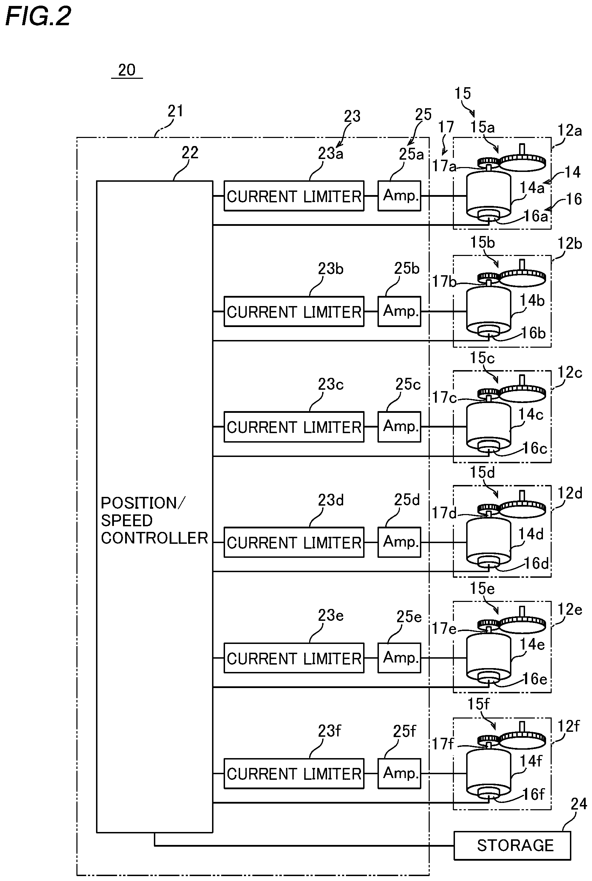

As shown in FIG. 2, motors 14a to 14f are provided at the joints 12a to 12f, respectively. Speed reducers 15a to 15f that transmit the drive forces of the motors 14a to 14f are provided at the motors 14a to 14f, respectively. The speed reducers 15a to 15f slow rotation of the motors 14a to 14f and transmit the rotation of the motors 14a to 14f, respectively. Thus, the joints 12a to 12f rotate. The motors 14a to 14f may be collectively referred to as a motor 14 below. In addition, the speed reducers 15a to 15f may be collectively referred to as a speed reducer 15 below. The motor 14 (14a to 14f) is an example of a drive in the claims. The speed reducer 15 (15a to 15f) is an example of a drive force transmitter in the claims.

Encoders 16a to 16f are provided at the motors 14a to 14f, respectively. The encoders 16a to 16f detect the angular positions of output shafts 17a to 17f of the motors 14a to 14f, respectively. The detected angular positions of the output shafts 17a to 17f are transmitted to a position/speed controller 22 described below. The encoders 16a to 16f may be collectively referred to as an encoder 16 below. In addition, the output shafts 17a to 17f may be collectively referred to as an output shaft 17 below.

The robot controller 20 includes a current limiting device 21 that limits a current to be carried to the motor 14 that transmits a drive force via the speed reducer 15. The current limiting device 21 includes the position/speed controller 22 and a current limiter 23 that limits the current to be carried to the motor 14 within a current limit value range.

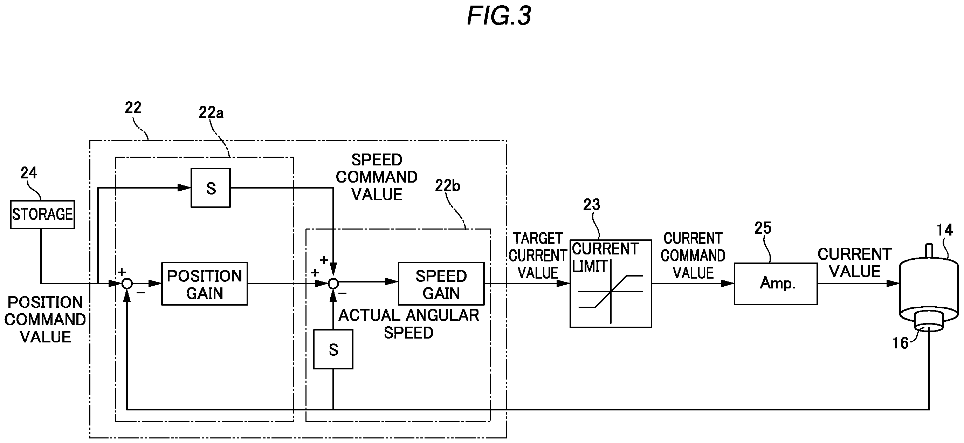

The position/speed controller 22 is electrically connected to each of the motors 14a to 14f, and carries a current to each of the motors 14a to 14f to control a torque output from each of the motors 14a to 14f. The position/speed controller 22 includes a position controller 22a (see FIG. 3) and a speed controller 22b (see FIG. 3). A storage 24 is connected to the position/speed controller 22. The storage 24 stores a program for driving each of the motors 14a to 14f.

The current limiter 23 includes current limiters 23a to 23f provided for a plurality of motors 14a to 14f, respectively. Amplifiers 25a to 25f are provided between the current limiters 23a to 23f and the motors 14a to 14f, respectively. The amplifiers 25a to 25f may be collectively referred to as an amplifier 25 below.

Control of the torque of the motor 14 is now described with reference to FIG. 3.

The position/speed controller 22 acquires a position command value (time history command position) of the joint 12 from the storage 24 (upper command device). Then, the position controller 22a calculates a deviation between the acquired position command value and the angular position (actual angular position) obtained from the encoder 16 of the joint 12. Then, the position controller 22a multiplies the calculated deviation by a position gain. The position controller 22a also differentiates the position command value to calculate a speed command value, which is the target speed of the joint 12.

Then, the speed controller 22b adds the deviation multiplied by the position gain and the speed command value and subtracts the actual angular speed obtained by differentiating the actual angular position from the added value to calculate a speed deviation. Then, the speed controller 22b multiplies the calculated speed deviation by a speed gain. Thus, the speed controller 22b generates a target current value corresponding to a target torque output from the motor 14.

Then, the speed controller 22b transmits the generated target current value to the current limiter 23. When the transmitted target current value is within a current limit value range, the current limiter 23 directly transmits the target current value to the amplifier 25. On the other hand, when the transmitted target current value is outside the current limit value range, the current limiter 23 limits the target current value to a value within the current limit value range and transmits the target current value to the amplifier 25.

The current limit value is a function of the speed, and includes a current limit value $Ilim+_i$ during rotation of the motor 14 in a positive direction, and a negative-side current limit value $Ilim-_i$ during rotation of the motor 14 in a negative direction. A speed command having been subjected to a third-order filter is used as a reference speed for a function of the current limit value $Ilim+_i$ and the current limit value $Ilim-_i$. The suffix "i" indicates the axis number of the robot 10.

In this embodiment, the speed command is multiplied by a filter including a transfer function taking into consideration speed control delays. Specifically, a filter including the following transfer function taking into consideration speed control delays is applied to the post-filtered speed command. When $vcom_i$ [rad/s] represents a prefiltered speed command and $vcom\_fil_i$ [rad/s] represents a post-filtered speed command, $vcom\_fil_i$ is represented by the following formula.

Mathematical Formula 1

$$vcom\_fil_i = \frac{Kvff_i s + Kp_i}{s + Kp_i} vcom_i$$

In this formula, $Kvff_i$ and $Kp_i$ represent a speed feedforward gain and a position gain, respectively. Therefore, when the speed feedforward gain is 1, $vcom_i$ [rad/s] and $vcom\_fil_i$ [rad/s] match.

Current Limit Value During Normal Operation

In this embodiment, the current limit value (a positive-side current limit value $Ilim\_new\_com+i$ and a negative-side current limit value $Ilim\_new\_com-_i$) is set to change according to the acceleration of the motor 14 when the speed reducer 15 operates normally. Furthermore, the current limit value is set to change according to the acceleration calculated from the speed command for the motor 14 (the speed command value calculated by the position controller 22a; see FIG. 3).

Specifically, $Ia_i$ [Arms] represented by the following formula is added to the positive-side current limit value $Ilim+_i$ and the negative-side current limit value $Ilim-_i$ such that the positive-side current limit value $Ilim+_i$ and the negative-side current limit value $Ilim-_i$ are set to change according to the acceleration of the motor 14.

Mathematical Formula 2

$$Ia_i = acom\_fil_i \times R_i \times (I_{i1} + I_{i2})/Kt_i$$

In this formula, $acom\_fil_i$ represents an acceleration [rad/s$^2$] obtained by differentiating $vcom\_fil_i$, $R_i$ represents the reduction ratio of the speed reducer 15, $I_{i1}$ represents the inertia [kgm$^2$] of the motor 14, $I_{i2}$ represents the inertia [kgm$^2$] of a drive system, and $Kt_i$ represents the torque constant [Arms/Nm] of the motor 14. Therefore, the current limit value $Ilim\_new\_com+_i$ and the current limit value $Ilim\_new\_com-_i$ set to change according to the acceleration of the motor 14 are represented by the following formula.

Mathematical Formula 3

$$Ilim\_new\_com +_i = Ilim +_i + Ia_i$$
$$Ilim\_new\_com -_i = Ilim -_i + Ia_i$$

The current limit value $Ilim\_new\_com+i$ is an example of a "first current limit value" or a "first positive-side current limit value" in the claims. The current limit value $Ilim\_new\_com-_i$ is an example of a "first current limit value" or a "first negative-side current limit value" in the claims.

That is, in this embodiment, the current limit value $Ilim\_new\_com+_i$ and the current limit value $Ilim\_new\_com-_i$ are set based on the acceleration $acom\_fil_i$ of the motor 14 and inertias $Ii_1$ and $Ii_2$ between the motor 14 and the speed reducer 15.

In this embodiment, the positive-side current limit value $Ilim\_new\_com+_i$ and the negative-side current limit value $Ilim\_new\_com-_i$ are set to increase according to the acceleration of the motor 14. That is, when $Ia_i$ in the above formula 3 above is a positive value, the positive-side current limit value $Ilim\_new\_com+_i$ and the negative-side current limit value $Ilim\_new\_com-_i$ increase according to the acceleration of the motor 14. In other words, when the absolute value of the positive-side current limit value $Ilim\_new\_com+i$ increases, the absolute value of the negative-side current limit value $Ilim\_new\_com-_i$ decreases.

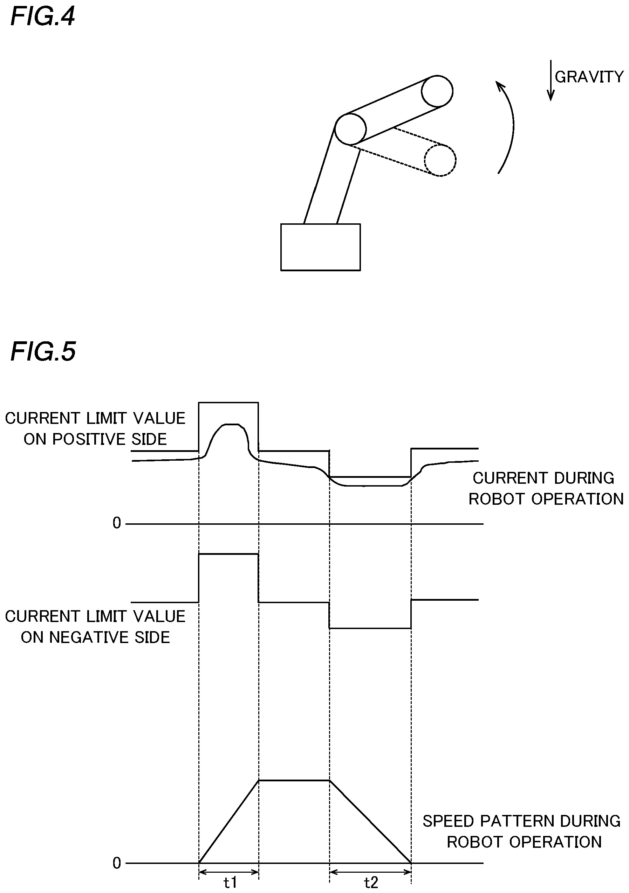

The operation in a case in which the motor 14 is rotating in the positive direction is described with reference to FIGS. 4 and 5. During a period t1, the rotation speed of the motor 14 increases. That is, $acom\_fil_i$ in the above formula 2 above has a positive value. In this case, $Ia_i$ in the above formula 3 above is a positive value, and the positive-side current limit value $Ilim\_new\_com+i$ increases.

On the other hand, in this embodiment, when a force or moment of the motor 14 is generated to resist an external force (specifically, gravity) applied to hinder the driving of the motor 14, the current limit value is set to decrease according to the acceleration of the motor 14. For example, as shown in FIG. 4, when the arm 11 of the robot 10 rotates upward while decelerating, the arm 11 decelerates due to gravity even when the motor 14 does not generate a torque. However, when the deceleration of the arm 11 is smaller than the deceleration of the torque due to gravity, the motor 14 needs to generate a torque to resist gravity (to rotate the arm 11 upward; see an arrow in FIG. 4). In this case, the positive-side current limit value $Ilim\_new\_com+i$ decreases, as shown in a period t2 in FIG. 5. Although in FIG. 5, the positive-side current limit value $Ilim\_new\_com+i$ and the negative-side current limit value $Ilim\_new\_com-_i$ are shown to change stepwise, in reality, the acceleration changes smoothly, and thus the positive-side current limit value $Ilim\_new\_com+_i$ and the negative-side current limit value $Ilim\_new\_com-_i$ also change slowly.

Current Limit Value During Abnormal Operation

When the arm 11 interferes, the speed command may deviate from a speed feedback value from the encoder 16. In this case, although the arm 11 is actually stopped, the speed command indicates that the arm 11 is being accelerated. Therefore, the current limit value during normal operation described above may excessively increase, and an excessive load may be imposed on the speed reducer 15, for example.

Therefore, in this embodiment, the current limit value (a positive-side current limit value $Ilim\_new\_fb+_i$ and a negative-side current limit value $Ilim\_new\_fb-_i$) is set to change according to an acceleration calculated from the speed feedback value of the motor 14 when the speed reducer 15 operates abnormally. The positive-side current limit value $Ilim\_new\_fb+i$ is an example of a "second current limit value" or a "second positive-side current limit value" in the claims. The negative-side current limit value $Ilim\_new\_fb-_i$ is an example of a "second current limit value" or a "second negative-side current limit value" in the claims.

Specifically, first, an acceleration $afb_i$ [rad/s$^2$] is calculated by differentiating a fed-back speed $vfb_i$.

Mathematical Formula 4

$$Iafb_i = afb_i \times R_i \times (I_{i1} + I_{i2})/Kt_i$$

In this formula, $Kt_i$ represents the torque constant [Nm/Arms] of the motor 14.

Then, the acceleration $afb_i$ [rad/s$^2$] is added to the positive-side current limit value $Ilim\_fb+_i$ and the negative-side current limit value $Ilim\_fb-i$ calculated as a speed obtained by feeding back the reference speed of the function of the current limit value such that the positive-side current limit value $Ilim\_new\_fb+_i$ and the negative-side current limit value $Ilim\_new\_fb-_i$ are calculated.

Mathematical Formula 5

$$Ilim\_new\_fb +_i = Ilim\_fb +_i + Iafb_i$$
$$Ilim\_new\_fb -_i = Ilim\_fb -_i + Iafb_i$$

The positive-side current limit value $Ilim\_fb+_i$ and the negative-side current limit value $Ilim\_fb-i$ are filtered to obtain the positive-side current limit value $Ilim\_fb\_fil+_i$ [Arms] and the negative-side current limit value $Ilim\_fb\_fil-_i$ [Arms]. Then, based on the following mathematical formula 6, a difference ($\Delta Tlim\_new+_i$ and $\Delta Tlim\_new-_i$) between the current limit value during normal operation (the current limit value based on the speed command) and the current limit value during abnormal operation (the current limit value based on the feedback value) is calculated.

Mathematical Formula 6

$$\Delta Ilim\_new +_i = (Ilim\_new\_com +_i) - (Ilim\_fb\_fil +_i)$$
$$\Delta Ilim\_new -_i = (Ilim\_new\_com -_i) - (Ilim\_fb\_fil -_i)$$
$$\Delta Tlim\_new +_i = \Delta Ilim\_new +_i \times R_i \times K_{ti}$$
$$\Delta Tlim\_new -_i = \Delta Ilim\_new -_i \times R_i \times K_{ti}$$

An increase in the above difference ($\Delta Tlim\_new+_i$, $\Delta Tlim\_new-_i$) indicates that the difference between the current limit value based on the speed command and the current limit value based on the feedback value increases, and when this difference exceeds an allowable value, the speed reducer 15, for example, may be damaged.

In this embodiment, when the absolute value of a difference ($\Delta Tlim\_new+_i$ and $\Delta Tlim\_new-_i$) in a torque limit value calculated from the difference between the current limit value during normal operation (the current limit value based on the speed command) and the current limit value during abnormal operation (the current limit value based on the feedback value) is equal to or more than a predetermined value, the current limit value during abnormal operation is used as the current limit value, and when the difference is less than the predetermined value, the current limit value during normal operation is used.

In this embodiment, the allowable value $T_{Gi}$ of the force or moment (the torque in this embodiment) of an output shaft of the speed reducer 15 during normal operation and the allowable value $T_{Gmaxi}$ of the force or moment of the output shaft of the speed reducer 15 during abnormal operation are set in advance. The predetermined value includes the absolute value $|T_{Gi}-T_{Gmaxi}|$ of a difference between the allowable value $T_{Gi}$ of the force or moment during normal operation and the allowable value $T_{Gmaxi}$ of the force or moment during abnormal operation. The allowable value $T_{Gi}$ corresponds to the allowable acceleration/deceleration torque of the speed reducer 15. The allowable value $T_{Gmaxi}$ corresponds to a momentary maximum torque at the time of emergency stop of the speed reducer 15. A safety factor may be set for the allowable value $T_{Gmaxi}$.

Specifically, in this embodiment, the absolute value $|\Delta Tlim\_new+_i|$ of the difference in the torque limit value calculated from the difference between the positive-side current limit value based on the speed command and the positive-side current limit value based on the feedback value is equal to or more than $|T_{Gi}-T_{Gmaxi}|$ or the absolute value $|\Delta Tlim\_new-_i|$ of the difference in the torque limit value calculated from the difference between the negative-side current limit value based on the speed command and the negative-side current limit value based on the feedback value is equal to or more than $|T_{Gi}-T_{Gmaxi}|$, and the current command is equal to or more than the positive-side current limit value based on the feedback value and the positive-side current limit value based on the speed command is equal to or more than the positive-side current limit value based on the feedback value, or the current command is equal to or less than the negative-side current limit value based on the feedback value and the negative-side current limit value based on the speed command is equal to or less than the negative-side current limit value based on the feedback value, as shown in the following mathematical formula 7, the current limit value based on the feedback value is used as the current limit value. More specifically, it is determined which of the current limit value based on the speed command and the current limit value based on the feedback value is to be used based on the following mathematical formula 7.

Mathematical Formula 7

$$\left|T_{Gmaxi} - T_{Gi}\right| \le \left|\Delta Tlim\_new +_i\right| \quad \text{or} \quad \left|T_{Gmaxi} - T_{Gi}\right| \le \left|\Delta Tlim\_new -_i\right|$$

and

$$Icom_i \ge Ilim\_new\_fb\_fil +_i \quad \text{and} \quad Ilim\_new\_com +_i \ge Ilim\_new\_fb\_fil +_i$$

or

$$Icom_i \le Ilim\_new\_fb\_fil -_i \quad \text{and} \quad Ilim\_new\_com -_i \le Ilim\_new\_fb\_fil -_i$$

Specifically, when the relationship of the above mathematical formula 7 is satisfied at any of the joints 12 of the robot 10, the positive-side current limit value Ilim_new_fb_fil+i and the negative-side current limit value Ilim_new_fb_fil-i based on the feedback value are used at all of the joints 12. On the other hand, when the relationship of the above mathematical formula 7 is not satisfied, the positive-side current limit value Ilim_new_com+i and the negative-side current limit value Ilim_new_com-i based on the speed command are used.

In this embodiment, when the current limit value Ilim_new_fb_fil+i based on the feedback value is larger than the current command Icom_i, the current limit value Ilim_new_com+i is larger than the current command Icom_i, the current limit value Ilim_new_fb_fil-i is smaller than the current command Icom_i, and the current limit value Ilim_new_com-i is smaller than current command Icom_i for a predetermined period of time when the current limit value based on the feedback value is used as the current limit value, as shown in the following mathematical formula 8, switching is performed and the current limit value (Ilim_new_com+i and Ilim_new_com-i) based on the speed command is used as the current limit value.

Mathematical Formula 8

$$Ilim\_new\_fb\_fil +_i > Icom_i,$$
$$Ilim\_new\_com +_i > Icom_i,$$
$$Ilim\_new\_fb\_fil -_i < Icom_i, \quad \text{and}$$
$$Ilim\_new\_com -_i < Icom_i$$

Specifically, when the conditions of the above mathematical formula 8 are continuously satisfied for the predetermined period of time at all the axes (joints 12) of the robot 10, switching is performed and the current limit value (Ilim_new_com+i and Ilim_new_com-i) based on the speed command is used as the current limit value.

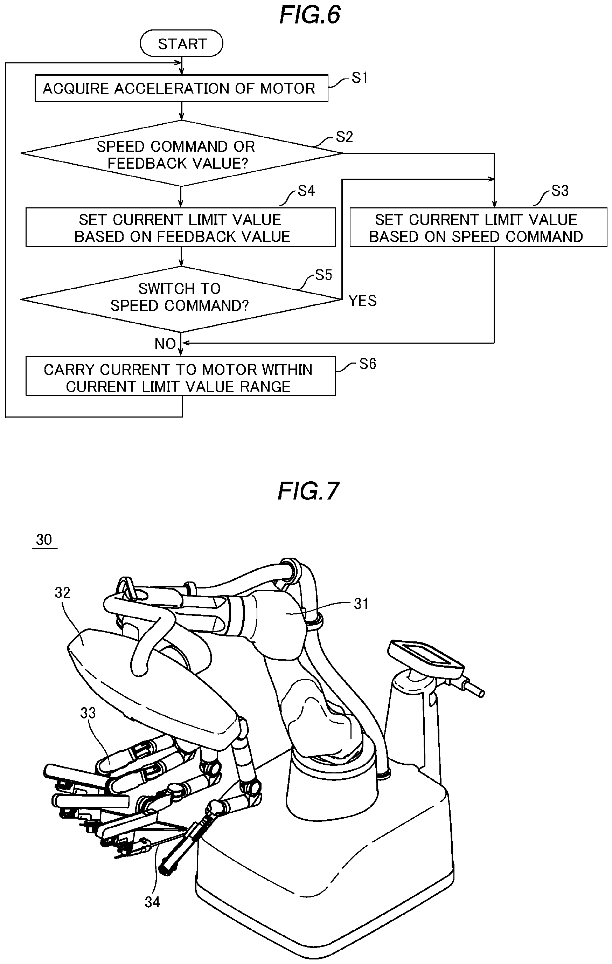

A current limiting method for limiting the current to be carried to the motor 14 that transmits a drive force via the speed reducer 15 is now described with reference to FIG. 6.

In step S1, the acceleration of the motor 14 is acquired. Specifically, the acceleration is acquired by performing second order differentiation of the time history command position from the upper command device. Furthermore, the acceleration of the motor 14 is acquired based on the angular position of the output shaft 17 of the motor 14 acquired from the encoder 16.

In step S2, it is determined which of the current limit value based on the speed command and the current limit value based on the feedback value is to be used based on the above mathematical formula 7.

When it is determined in step S2 that the current limit value based on the speed command is to be used, a current limit value for the current to be carried to the motor 14 according to the above mathematical formula 3 is set based on the acceleration of the motor 14 acquired from the speed command in step S3. Then, the process advances to step S6.

When it is determined in step S2 that the current limit value based on the feedback value is to be used, a current limit value for the current to be carried to the motor 14 according to the above mathematical formula 5 is set based on the acceleration of the motor 14 acquired from the feedback value in step S4.

When the process advances to step S4, it is determined in step S5 based on the above mathematical formula 8 whether or not the current limit value is switched to the current limit value based on the speed command. In the case of yes in step S5, a current limit value for the current to be carried to the motor 14 according to the above mathematical formula 3 is set based on the acceleration of the motor 14 acquired from the speed command in step S3. In the case of no in step S5, the process advances to step S6.

In step S6, a current is carried to the motor 14 within the set current limit value range. The operations in step S1 to step S6 are repeated while the motor 14 is in operation.

Advantages of This Embodiment

According to this embodiment, the following advantages are achieved.

Advantages of Current Limiting Device and Robot

According to this embodiment, as described above, the current limit value for the current to be carried to the motor 14 is set to change according to the acceleration of the motor 14. Accordingly, even when the inertia between the motor 14 and the speed reducer 15 is large, the motor 14 can generate a sufficient torque by changing the current limit value according to the acceleration of the motor 14. Consequently, even when the inertia between the motor 14 and the speed reducer 15 is large, a member (arm 11) driven by the motor 14 can be sufficiently accelerated.

According to this embodiment, as described above, the current limit value is set to increase according to the acceleration of the motor 14. Accordingly, even when the inertia between the motor 14 and the speed reducer 15 is large, the current limit value increases according to the acceleration of the motor 14, and thus the motor 14 can generate a sufficient torque. Consequently, the member (arm 11) driven by motor 14 can be sufficiently accelerated.

According to this embodiment, as described above, the current limit value is set to decrease according to the acceleration of the motor 14 when the force or moment (the torque in this embodiment) of the motor 14 is generated to resist the external force applied to hinder the driving of the motor 14. When the degree of deceleration of the member (arm 11) driven by the motor 14 is smaller than the degree of deceleration due to gravity, the force or moment of the motor 14 is generated to resist gravity (upward). Therefore, with the configuration as described above, the operation of the motor 14 to excessively resist gravity can be reduced or prevented, and thus application of an excessive force to the speed reducer 15 can be reduced or prevented.

According to this embodiment, as described above, the current limit value is set based on the acceleration of the motor 14 and the inertia between the motor 14 and the speed reducer 15. Torque is expressed as the product of inertia and acceleration, and thus the current limit value is set based on the acceleration of the motor 14 and the inertia between the motor 14 and the speed reducer 15 such that an appropriate current limit value can be set to output a desired torque.

According to this embodiment, as described above, the current limit value includes the current limit value (the positive-side current limit value $Ilim\_new\_com+_i$ and the negative-side current limit value $Ilim\_new\_com-_i$) set to change according to the acceleration calculated from the speed command for the motor 14. Accordingly, the current limit value can be easily set based on the speed command for the motor 14.

According to this embodiment, as described above, the speed command is multiplied by the filter including the transfer function taking into consideration speed control delays. Accordingly, the speed command is corrected to match the speed control delays, and thus the current limit value can be appropriately set according to the acceleration calculated from the corrected speed command.

According to this embodiment, as described above, the current limit value includes the current limit value (the positive-side current limit value $Ilim\_new\_fb+_i$ and the negative-side current limit value $Ilim\_new\_fb-_i$) set to change according to the acceleration calculated from the speed feedback value of the motor 14. When the member (arm 11) driven by the motor 14 interferes with a surrounding object and stops, for example, a deviation between the speed command (the command value for further moving the member driven by the motor 14) and the feedback value (stop state) increases. In this case, the current limit value set to change according to the acceleration calculated from the speed feedback value of the motor 14 is used as described above such that the current limit value can be appropriately set based on the actual state of the member driven by the motor 14.

According to this embodiment, as described above, the current limit value based on the speed command is used as the current limit value when the speed reducer 15 operates normally, and the current limit value based on the feedback value is used as the current limit value when the speed reducer 15 operates abnormally. Accordingly, when the speed reducer 15 operates normally, oscillation of the current limit value can be reduced or prevented, and when the speed reducer 15 operates abnormally, the current limit value can be appropriately set based on the actual state of the member driven by the motor 14.

According to this embodiment, as described above, the current limit value based on the feedback value is used as the current limit value when the absolute value of the difference in the torque limit value calculated from the difference between the current limit value based on the speed command and the current limit value based on the feedback value is equal to or more than the predetermined value, and the current limit value based on the speed command is used as the current limit value when the difference is less than the predetermined value. Accordingly, the absolute value of the difference in the torque limit value reflects the magnitude of the deviation between the speed command and the feedback value, and thus the current limit value based on the speed command or the current limit value based on the feedback value can be appropriately used based on the magnitude of the deviation.

According to this embodiment, as described above, the current limit value based on the speed command includes the current limit value Ilim_new_com+i during driving of the motor 14 in the positive direction and the current limit value Ilim_new_com-i during driving of the motor 14 in the negative direction, and the current limit value based on the feedback value includes the current limit value Ilim_new_fb+i (Ilim_new_fb2+i) during the driving in the positive direction and the current limit value Ilim_new_fb-i (Ilim_new_fb2-i) during the driving in the negative direction. Accordingly, the current limit value can be appropriately set both when the motor 14 generates a torque in the positive direction and when the motor 14 generates a torque in the negative direction.

According to this embodiment, as described above, the current limit value based on the speed command or the current limit value based on the feedback value is used based on the above mathematical formula 7. Accordingly, in addition to detecting that the deviation between the speed command and the feedback value is large based on the absolute value of the above difference, conditions are added that the current command is outside the range of the current limit value based on the feedback value and that the current limit value based on the speed command is outside the range of the current limit value based on the feedback value, and the erroneous use of the current limit value based on the feedback value as the current limit value can be reduced or prevented.

According to this embodiment, as described above, based on the above mathematical formula 8, switching is performed such that the current limit value based on the speed command is used as the current limit value. Accordingly, the current command is within the range of the current limit value based on the speed command for the predetermined period of time, and thus switching to the appropriate current limit value based on the speed command as the current limit value can be performed.

According to this embodiment, as described above, the allowable value $T_{Gi}$ of the force or moment (the torque in this embodiment) of the output shaft of the speed reducer 15 during normal operation and the allowable value $T_{Gmaxi}$ of the force or moment of the output shaft of the speed reducer 15 during abnormal operation are set in advance. The predetermined value includes the absolute value $|T_{Gi}-T_{Gmaxi}|$ of the difference between the allowable value $T_{Gi}$ of the force or moment during normal operation and the allowable value $T_{Gmaxi}$ of the force or moment during abnormal operation. Accordingly, it can be easily determined which of the current limit value based on the speed command and the current limit value based on the feedback value is to be used as the current limit value based on the allowable value of the speed reducer 15.

According to this embodiment, as described above, the motor 14 is provided at the joint 12 of the robot 10. Accordingly, regarding the motor 14 provided at the joint 12 of the robot 10, even when the inertia between the motor 14 and the speed reducer 15 is large, the member driven by the motor 14 can be sufficiently accelerated.

Advantages of Current Limiting Method

According to this embodiment, as described above, the current limiting method includes setting of the current limit value for the current to be carried to the motor 14 based on the acquired acceleration of the motor 14. Accordingly, even when the inertia between the motor 14 and the speed reducer 15 is large, the motor 14 can generate a sufficient torque by changing the current limit value according to the acceleration of the motor 14. Consequently, it is possible to provide the current limiting method capable of sufficiently accelerating the member (arm 11) driven by the motor 14 even when the inertia between the motor 14 and the speed reducer 15 is large.

Modified Examples

The embodiment disclosed this time must be considered as illustrative in all points and not restrictive. The scope of the present disclosure is not shown by the above description of the embodiment but by the scope of claims for patent, and all modifications (modified examples) within the meaning and scope equivalent to the scope of claims for patent are further included.

For example, while the example in which the present disclosure is applied to the industrial robot 10 has been shown in the aforementioned embodiment, the present disclosure is not limited to this. For example, as shown in FIG. 7, the present disclosure may be applied to a medical robot 30. The robot 30 includes a positioner 31 (articulated robot), an arm base 32, and a plurality of arms 33. A surgical instrument 34 is attached to the tip end of each of the plurality of arms 33. The current limiting device 21 of the present disclosure limits a current to be carried to the positioner 31 (articulated robot) and motors 14 at joints of the arms 33, for example. Thus, in the medical robot 30, even when inertias between the motors 14 and speed reducers 15 are large, the arms 33 driven by the motors 14 can be sufficiently accelerated.

Particularly as to the medical robot 30, a space for arranging the medical robot 30 is limited, many joints are provided, and it is necessary to decrease a drive voltage in order to reduce the impact at the time of collision, for example, and thus low-output motors 14 may be used with a high reduction ratio. In this case, it is particularly effective to change current limit values according to the acceleration of the motors 14 as in the present disclosure such that the arms 33 driven by the motors 14 can be sufficiently accelerated even when the inertias between the motors 14 and the speed reducers 15 are large.

While the example in which the motor 14 is applied as the "drive" of the present disclosure has been shown in the aforementioned embodiment, the present disclosure is not limited to this. For example, an actuator such as a proportional solenoid, a linear motor, a voice coil, or a spherical actuator may be applied as the "drive" of the present disclosure. Alternatively, a powder clutch/brake or a hysteresis clutch/brake may be applied as the "drive" of the present disclosure.

While the example in which the current limit value based on the speed command and the current limit value based on the speed feedback value are used has been shown in the aforementioned embodiment, the present disclosure is not limited to this. For example, only one of the current limit value based on the speed command and the current limit value based on the speed feedback value may be used.

While the example in which the speed command is multiplied by the filter including the transfer function taking into consideration speed control delays has been shown in the aforementioned embodiment, the present disclosure is not limited to this. For example, when there is no speed control delay (or when the delays are small), the speed command may not be multiplied by the filter including the transfer function taking into consideration speed control delays.

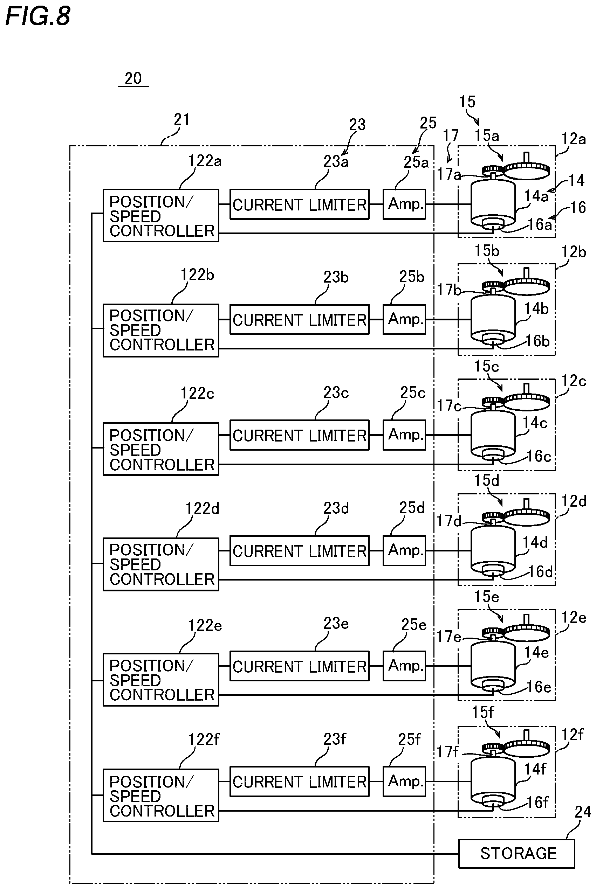

While the example in which the position/speed controller 22 is provided in common (one) for the motors 14a to 14f has been shown in the aforementioned embodiment, the present disclosure is not limited to this. For example, as shown in FIG. 8, position/speed controllers 122a to 122f may be provided individually for motors 14a to 14f.

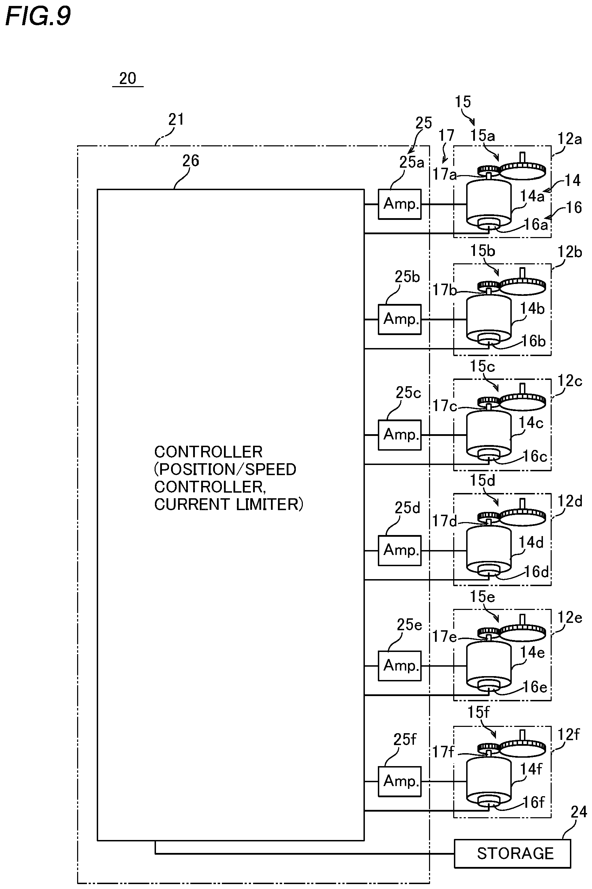

While the example in which the position/speed controller 22 is provided separately from the current limiter 23a to 23f has been shown in the aforementioned embodiment, the present disclosure is not limited to this. For example, as shown in FIG. 9, one controller 26 including a position/speed controller and a current limiter may be provided.

While the example in which the current limiter 23 is provided upstream of the amplifier 25 has been shown in the aforementioned embodiment, the present disclosure is not limited to this. In the present disclosure, the current limiter 23 is only required to be provided somewhere (such as on the output side of the amplifier 25 or in a line fed back from the encoder 16) in a line that connects the position/speed controller 22 to the motor 14.

Description of Reference Numerals

10: robot
12, 12a to 12f: joint
14, 14a to 14f: motor (drive)
15, 15a to 15f: speed reducer (drive force transmitter)
20: robot controller
21: current limiting device
23, 23a to 23f: current limiter
30: robot (medical robot)
100: robot system
Ilim_new_com+$_i$: current limit value (first current limit value, first positive-side current limit value)
Ilim_new_com-$_i$: current limit value (first current limit value, first negative-side current limit value)
Ilim_new_fb_fil+$_i$: current limit value (second current limit value, second positive-side current limit value)
Ilim_new_fb_fil-$_i$: current limit value (second current limit value, second negative-side current limit value)

**Claims**

1. A current limiting device to limit a current to be carried to a drive that generates a force or moment when the current is carried to the drive and transmits a drive force via a drive force transmitter, the current limiting device comprising:

   a current limiter to limit the current to be carried to the drive within a range of a current limit value; wherein
   the current limit value is set to change according to an acceleration of the drive.

2. The current limiting device according to claim 1, wherein the current limit value is set to increase according to the acceleration of the drive.

3. The current limiting device according to claim 1 or 2, wherein the current limit value is set to decrease according to the acceleration of the drive when the force or moment of the drive is generated to resist an external force applied to hinder driving of the drive.

4. The current limiting device according to any one of claims 1 to 3, wherein the current limit value is set based on the acceleration of the drive and an inertia between the drive and the drive force transmitter.

5. The current limiting device according to any one of claims 1 to 4, wherein the current limit value includes a first current limit value set to change according to an acceleration calculated from a speed command for the drive.

6. The current limiting device according to claim 5, wherein the speed command is multiplied by a filter including a transfer function taking into consideration a speed control delay.

7. The current limiting device according to any one of claims 1 to 6, wherein the current limit value includes a second current limit value set to change according to an acceleration calculated from a speed feedback value of the drive.

8. The current limiting device according to claim 7, wherein

the current limit value includes a first current limit value set to change according to an acceleration calculated from a speed command for the drive; and
the first current limit value is used as the current limit value when the drive force transmitter operates normally, and the second current limit value is used as the current limit value when the drive force transmitter operates abnormally.

9. The current limiting device according to claim 8, wherein the second current limit value is used as the current limit value when an absolute value of a difference in a torque limit value calculated from a difference between the first current limit value and the second current limit value is equal to or more than a predetermined value, and the first current limit value is used as the current limit value when the difference is less than the predetermined value.

10. The current limiting device according to claim 8 or 9, wherein

the first current limit value includes a first positive-side current limit value during driving of the drive in a positive direction and a first negative-side current limit value during driving of the drive in a negative direction; and
the second current limit value includes a second positive-side current limit value during the driving in the positive direction and a second negative-side current limit value during the driving in the negative direction.

11. The current limiting device according to claim 10, wherein the second current limit value is used as the current limit value when:

an absolute value of a difference in a torque limit value calculated from a difference between the first positive-side current limit value and the second positive-side current limit value is equal to or more than a predetermined value, or an absolute value of a difference in a torque limit value calculated from a difference between the first negative-side current limit value and the second negative-side current limit value is equal to or more than the predetermined value; and
a current command is equal to or more than the second positive-side current limit value, and the first positive-side current limit value is equal to or more than the second positive-side current limit value; or
the current command is equal to or less than the second negative-side current limit value, and the first negative-side current limit value is equal to or less than the second negative-side current limit value.

12. The current limiting device according to claim 10 or 11, wherein switching is performed such that the first positive-side current limit value and the first negative-side current limit value are used as the current limit value when the second positive-side current limit value is larger than a current command, the first positive-side current limit value is larger than the current command, the second negative-side current limit value is smaller than the current command, and the first negative-side current limit value is smaller than current command for a predetermined period of time when the second current limit value is used as the current limit value.

13. The current limiting device according to any one of claims 9 to 12, wherein

an allowable value of a force or moment of an output shaft of the drive force transmitter during normal operation and an allowable value of a force or moment of the output shaft of the drive force transmitter during abnormal operation are set in advance; and
the predetermined value includes an absolute value of a difference between the allowable value of the force or moment during the normal operation and the allowable value of the force or moment during the abnormal operation.

14. The current limiting device according to any one of claims 1 to 13, wherein the drive includes a motor provided at a joint of a robot.

15. The current limiting device according to claim 14, wherein the robot includes a medical robot.

16. A robot system comprising:

a robot; and
a robot controller configured or programmed to control the robot; wherein
the robot includes:

a joint;
a motor provided at the joint; and
a speed reducer to slow rotation of the motor;

the robot controller includes a current limiter to limit a current to be carried to the motor within a range of a current limit value; and
the current limit value is set to change according to an acceleration of the motor.

17. A current limiting method for limiting a current to be carried to a drive that generates a force or moment when the current is carried to the drive and transmits a drive force via a drive force transmitter, the current limiting method comprising:

acquiring an acceleration of the drive;
setting a current limit value of the current to be carried to the drive based on the acquired acceleration of the drive; and
carrying the current to the drive within a range of the set current limit value.

FIG.1

## FIG.2

*FIG.3*

EP 4 213 374 A1

*FIG.4*

GRAVITY

*FIG.5*

CURRENT LIMIT VALUE
ON POSITIVE SIDE

CURRENT DURING
ROBOT OPERATION

0

CURRENT LIMIT VALUE
ON NEGATIVE SIDE

SPEED PATTERN DURING
ROBOT OPERATION

0

t1          t2

## FIG.6

```
                    ┌─────────┐
                    │  START  │
                    └────┬────┘
                         │
         ┌───────────────┤
         │    ┌──────────▼──────────────────────┐
         │    │ ACQUIRE ACCELERATION OF MOTOR   │──S1
         │    └──────────┬──────────────────────┘
         │               │
         │        ╱──────▼──────────╲  S2
         │      ╱  SPEED COMMAND OR   ╲─────────────────────┐
         │      ╲  FEEDBACK VALUE?    ╱                     │
         │        ╲─────┬────────────╱                      │
         │              │                                   │
         │   ┌──────────▼──────────┐ S4      ┌──────────────▼──────────┐ S3
         │   │ SET CURRENT LIMIT   │         │ SET CURRENT LIMIT VALUE │
         │   │ VALUE BASED ON      │         │ BASED ON SPEED COMMAND  │
         │   │ FEEDBACK VALUE      │         └──────────────┬──────────┘
         │   └──────────┬──────────┘ S5                     │
         │        ╱─────▼──────╲                            │
         │      ╱  SWITCH TO     ╲  YES                     │
         │      ╲ SPEED COMMAND? ╱──────                    │
         │        ╲──────┬──────╱                           │
         │            NO │◄─────────────────────────────────┘
         │   ┌───────────▼───────────────────┐ S6
         │   │ CARRY CURRENT TO MOTOR WITHIN  │
         │   │ CURRENT LIMIT VALUE RANGE      │
         │   └───────────┬───────────────────┘
         └───────────────┘
```

## FIG.7

30

FIG.8

*FIG.9*

CONTROLLER
(POSITION/SPEED
CONTROLLER,
CURRENT LIMITER)

Amp.

STORAGE

## INTERNATIONAL SEARCH REPORT

International application No.

**PCT/JP2021/032616**

### A.    CLASSIFICATION OF SUBJECT MATTER

*H02P 29/40*(2016.01)i; *B25J 9/12*(2006.01)i
FI:    H02P29/40; B25J9/12

According to International Patent Classification (IPC) or to both national classification and IPC

### B.    FIELDS SEARCHED

Minimum documentation searched (classification system followed by classification symbols)

H02P29/40; B25J9/12

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X | JP 2012-253991 A (HOSHI, Satoshi) 20 December 2012 (2012-12-20)<br>    paragraphs [0016]-[0215], fig. 1-41 | 1-2, 5-7, 14-17 |
| A | | 3-4, 8-13 |
| X | JP 2016-154419 A (KYOCERA DOCUMENT SOLUTIONS INC.) 25 August 2016 (2016-08-25)<br>    paragraphs [0014]-[0071], fig. 1-5 | 1, 16-17 |
| A | | 2-15 |
| A | JP 2016-93854 A (MAKITA CORP.) 26 May 2016 (2016-05-26)<br>    paragraphs [0001]-[0091], fig. 1-5 | 1-17 |
| A | JP 2015-220857 A (HARMONIC DRIVE SYSTEMS INC.) 07 December 2015 (2015-12-07)<br>    paragraphs [0007], [0008], [0019]-[0023], [0040]-[0045], fig. 3-5 | 1-17 |

☐ Further documents are listed in the continuation of Box C.    ☑ See patent family annex.

|  |  |  |  |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 October 2021** | **26 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/032616**

| Patent document cited in search report | | | Publication date (day/month/year) | Patent family member(s) | Publication date (day/month/year) |
|---|---|---|---|---|---|
| JP | 2012-253991 | A | 20 December 2012 | (Family: none) | |
| JP | 2016-154419 | A | 25 August 2016 | US 2016/0248366 A1 paragraphs [0016]-[0086], fig. 1-5 | |
| JP | 2016-93854 | A | 26 May 2016 | (Family: none) | |
| JP | 2015-220857 | A | 07 December 2015 | (Family: none) | |

Form PCT/ISA/210 (patent family annex) (January 2015)

# EP 4 213 374 A1

**REFERENCES CITED IN THE DESCRIPTION**

**Patent documents cited in the description**

- JP 2008073790 A